# EUROPÄISCHE PATENTSCHRIFT

(11) **EP 0 678 243 B1**
(45) Veröffentlichungstag und Bekanntmachung des Hinweises auf die Patenterteilung: **10.02.1999**
(21) Anmeldenummer: 95103376.0
(22) Anmeldetag: 09.03.1995
(51) Int. Cl.: A22C 21/00

(54) **Einrichtung zum Bearbeiten der Körper geschlachteten Geflügels**
Device for the treatment of the body of slaughtered birds
Dispositif pour le traitement du corps de volailles abattues

(30) Priorität: 20.04.1994 DE 4413683
(43) Veröffentlichungstag der Anmeldung: 25.10.1995
(73) Patentinhaber: NORDISCHER MASCHINENBAU RUD. BAADER GMBH + CO KG, 23560 Lübeck (DE)
(72) Erfinder: Bargelé, Norbert, Dr., D-23617 Stockelsdorf (DE); Brandt, Manfred, D-23564 Lübeck (DE); Kunig, Helmut, D-23611 Bad Schwartau (DE)
(74) Vertreter: Schaller, Hans-Jörg

(56) Entgegenhaltungen:
- EP-A- 0 183 986
- EP-A- 0 336 162
- EP-A- 0 380 714
- EP-A- 0 429 887

## Beschreibung

Die Erfindung geht aus von einer Einrichtung zum Bearbeiten der Körper geschlachteten Geflügels oder Teilen davon zwecks Ablösen des Fleisches von dem Skelett, insbesondere im Bereich und von dem Gabelbein (clavicula), wobei das zu bearbeitende Produkt in bezug auf die Lage der Innenseite des Brustbeins (sternum) und seiner Symmetrieebene ausgerichtet gehaltert ist und wobei die Gabelbeinschenkel mindestens von innen her mittels eines zwischen diese bringbaren Stützelementes abgestützt werden und das Ablösen des Fleisches durch längs der Flanken des Stützelementes geführte Schälmesser erfolgt.

Die Erfindung nimmt damit Bezug auf eine Einrichtung, wie sie beispielsweise der DE-OS 38 11 317 zu entnehmen ist. Diese Schritt zeigt eine Einrichtung mit einem angetriebenen Förderer, der mit Aufnahmemitteln in Form von Sätteln zur Aufnahme des Bearbeitungsgutes bestückt ist und dieses mit der Halsöffnung voraus vorschiebt. Zum Freischälen des Gabelbeins wird zwischen dessen Schenkel ein Formklotz eingesteuert, dessen Gestalt der Innenkontur des Gabelbeins angepaßt ist und dieses von innen abstützt. Über die Außenkontur des so fixierten Gabelbeins werden dann Schälmesser geführt, so daß das Fleisch abgelöst wird.

Wie bereits in dieser Schritt erwähnt, ist das Gabelbein bei einem erheblichen Teil der zu bearbeitenden Geflügelkörper gebrochen oder überdehnt. Dabei kann es mehrere Brüche aufweisen, was dazu führt, daß freie Knochenstücke, zwar im wesentlichen an ihrem natürlichen Platz, aber lediglich in dem weichen Gewebe eingebunden vorhanden sind. Die Tatsache, daß unter Mitwirkung dieser Einrichtung gewonnene Filets in nicht akzeptablem Maße Knochensplitter des Gabelbeins enthalten, zeigt, daß es bei einem Ausgangsprodukt mit derart gebrochenem oder verformtem Gabelbein nicht sicher gelingt, die Gabelbeinschenkel so zu versammeln, daß das Gabelbein vollständig freischälbar ist.

Diese Art der Qualitätsminderung ist als besonders gravierend anzusehen, da solche Knochensplitter in der Regel eine bizarre Bruchfläche haben und demzufolge zu üblen Verletzungen in der Mundhöhle führen können, wenn der Konsument beim Zubeißen unverhofft einen solchen Knochensplitter trifft. Wie das Rechtsgeschehen zeigt sind derartige Verletzungen regelmäßig Anlaß für Forderungen von Schadenersatzleistungen, für die der Filethersteller aufzukommen hat. Will man solche Verletzungen ausschließen, so ist eine durchgehende Inspektion der Filets mit eventueller Trimmbearbeitung erforderlich, was personalaufwendig und damit kostspielig ist.

Es ist die Aufgabe der Erfindung, die bekannte Einrichtung dahingehend zu modifizieren, daß mit ihr Filets gewinnbar sind, die mit großer Sicherheit frei von Knochensplittern der beschriebenen Art sind.

Diese Aufgabe wird erfindungsgemäß dadurch gelöst, daß jedem Schälmesser mindestens ein unmittelbar vor dessen Schneide wirksames, die Gabelbeinschenkel gegen die Flanken des Stützelementes drängendes Andrückelement zugeordnet ist.

Mit einer derartigen Einrichtung gelingt es, auch eventuell vorhandene Bruchstücke des Gabelbeins oder überspreizte Schenke desselben so an bzw. in den Flanken des Stützelementes zu versammeln, daß die Schälmesser längs der Flanken des Stützelementes führbar sind, ohnedaß die Gefahr besteht, daß die Schälmesser hinter solche Bruchstücke greifen und dabei diese in das Filetfleisch drängen oder solche Bruchstücke selbst erzeugen.

Bei dieser Einrichtung, bei der die Halterung des zu bearbeitenden Produktes durch mit einem angetriebenen Förderer verbundene sattelförmige Aufnahmemittel erfolgt, hat sich eine Anordnung bewährt, bei der jedes Andrückelement als unter Federkraft in die Bahn des Produktes einschwenkbarer Schwenkarm ausgebildet ist, der an seinem freien Ende mit einer mit dem Produkt in Kontakt tretenden und im wesentlichen in Höhe der Bahn des Gabelbeins angeordneten Andrückfläche versehen ist.

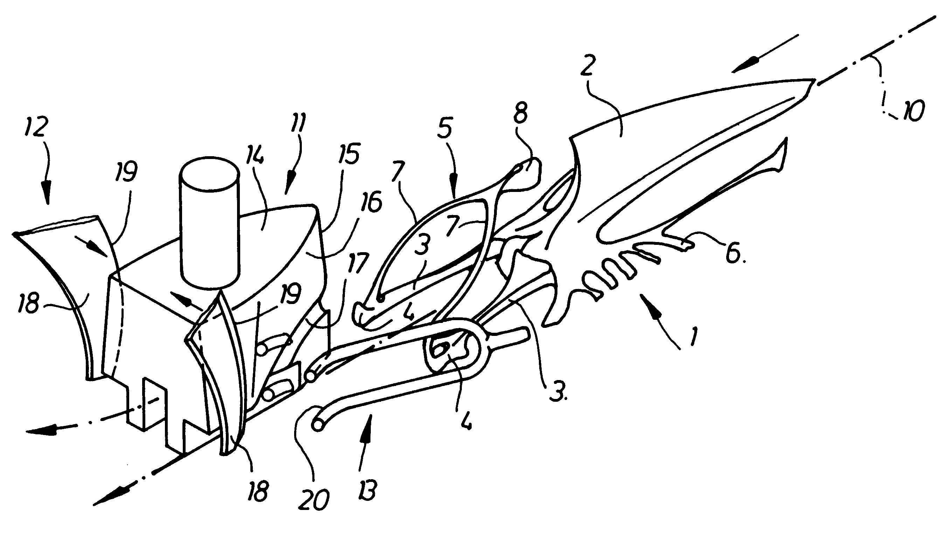

Die erfindungsgemäße Einrichtung wird nachstehend anhand eines in der Zeichnung dargestellten Ausführungsbeispiels näher erläutert.

Die einzige Figur zeigt in schematischer Darstellung einen perspektivischen Ausschnitt aus einer Geflügel-Filetiermaschine im Bereich der Bearbeitungsvorrichtung zum Freischälen des Gabelbeins, wobei lediglich die für das Verständnis des entsprechenden Bearbeitungsvorgangs wesentlichen Teile und deren Zuordnung zueinander und zu dem zu bearbeitenden Produkt gezeigt sind. Dabei stellt die Zeichnung eine Konstellation der zusammenwirkenden Teile der Einrichtung kurz vor Beginn des detailliert in dem Abschnitt Wirkungsweise beschriebenen Bearbeitungsvorgangs dar und zeigt das zu bearbeitende Produkt im Hinblick auf eine bessere Beschreibbarkeit der Funktion als entfleischtes Skelett.

Die Einrichtung ist in einem nicht näher gezeigten Gestell einer Vorrichtung zum Gewinnen des Brustfleisches von den Körpern geschlachteten Geflügels, hier von sogenannten Brustkappen 1 , untergebracht und weist einen auf geeignete Weise umlaufend angetriebenen, nurangedeutet dargestellten endlosen Förderer 10 auf, der mit nicht gezeigten Sätteln für die Aufnahme und Halterung der zu bearbeitenden Brustkappen 1 bestückt ist und die gesamte Maschine durchzieht. Der Begriff "Brustkappe" bezeichnet einen von den Extremitäten befreiten Geflügel-Teilkörper mit Skeletteilen, die das Brustbein 2 , die Rabenbeine 3 mit den an deren freien Enden befindlichen Flügelgelenken 4 und das mit diesen verbundene Gabelbein 5 sowie mindestens Teile der Rippen 6 umfassen. Die Einrichtung besteht weiter aus nicht gezeigten Führungsmitteln zum Niederhalten der Brustkappen 1 auf dem Sattel, einem zwischen das Gabelbein 5 einsteuerbaren Stützelement 11 , einem Schälwerkzeug 12 und einem Paar seitlicher Andrückelemente 13.

Das Stützelement 11 umfaßt einen keilförmigen Formklotz 14 , der mit seiner Keilnase 15 gegen die Bewegungsrichtung des Förderers 10 weist und um eine nicht gezeigte, über der Bahn des Förderers 10 befindliche gestellfeste Achse in der mit der Symmetrieebene der Brustkappe 1 übereinstimmenden Förderebene schwenkbar ist. Die Steuerung der Schwenkbewegung erfolgt über ein ebenfalls nicht dargestelltes Kurvengetriebe in Abstimmung mit der Vorlaufbewegung der Brustkappe 1 bzw. des Förderers 10 und der jeweiligen Stellung des die Brustkappe 1 tragenden Sattels. Die Flanken 16 des Formklotzes 14 sind in Anpassung an die Gabelform des Gabelbeins 5 konvex ausgebildet. Dabei sind die Flanken 16 weiter je mit einer nutartigen Aussparung 17 versehen, deren Verlauf und Querschnittsform so ausgeführt sind, daß die Gabelbeinschenkel 7 sich in diese einlegen, wenn der Formklotz 14 zwischen diese eingeschwenkt ist und außen bündig verschwinden, wenn die Keilnase 15 an der Innenseite des Gabelbeins 5 anliegt.

Das Schälwerkzeug 12 ist im Bereich der Einschwenkstellung des Formklotzes 14 gestellfest angeordnet und besteht aus einem Paar Schälmesser 18 , die symmetrisch zu der Bahn der Sättel angebracht sind. Dabei weisen die Schneiden 19 gegen die Bewegungsrichtung des Förderers 10 und erstrecken sich im wesentlichen senkrecht dazu und parallel zu den Flanken 16 des Formklotzes 14 . Die Schälmesser 18 werden durch ein nicht gezeigtes Kurvengetriebe in Abstimmung mit der Steuerung für die Schwenkbewegung des Formklotzes 14 derart gesteuert, daß sich die Schneiden 14 während der sich aus der Mitlaufbewegung des Formklotzes 14 mit der Vorlaufbewegung der Brustkappe 1 ergebenden Schwenkbewegung dem Verlauf der Flanken 16 des Formklotzes 14 entsprechend bewegen. Nach Ankunft der Schneiden 19 im Bereich der Keilnase 15 des Formklotzes 14 werden die Schälmesser 18 aus der Bahn der Brustkappen 1 ausgeschwenkt.

Die Andrückelemente 13 sind je als Schwenkarm ausgebildet, der unter Federkraft in die Bahn der Brustkappen 1 eingeschwenkt gehalten ist. Jedes Andrückelement 13 ist an seinem freien Ende gabelförmig ausgeführt und bildet kufenförmige Andrückflächen 20 , die im wesentlichen in der Höhe der Bahn des Gabelbeins 5 und unmittelbar vor der Wirkstelle der Schneiden 19 der Schälmesser 18 mit der Brustkappe 1 in Kontakt treten. Aus Gründen der Übersichtlichkeit ist das Andrückelement 13 in einer halb ausgeschwenkten Stellung und die Grundstellung als Phantom-Teilbild dargestellt.

Die Wirkungsweise der Einrichtung ist folgende:
Nach Aufsatteln der vorzugsweise enthäuteten Brustkappe 1 gelangt diese mit nach oben weisendem Brustbein 2 und vorausweisenden Flügelgelenken 4 in den Bereich der vorstehend beschriebenen Bearbeitungseinrichtung für dasGabelbein 5 . Bei Eintreten in diesen Bereich wird der Formklotz 14 gegen die Bewegungsrichtung der Brustklappe 1 zwischen die Gabelbeinschenkel 7 eingesteuert, wobei die Relativbewegung zwischen der Brustkappe 1 und dem Formklotz 14 solange fortgesetzt wird, bis dessen Keilnase 15 den Bereich des Gabelbeinkopfes 8 erreicht hat. Damit haben sich die Gabelbeinschenkel 7 in die Aussparungen 17 in den Flanken 16 des Formklotzes 14 eingelegt, so daß die Außenkontur des Gabelbeins 5 mit den Flanken 16 des Formklotzes 14 bündig stehen. Dieser Vorgang wird durch die Andrückelemente 13 unterstützt, zwischen die die Brustkappe 1 inzwischen eingetreten ist. Diese Andrückelemente 13 streichen während des Vorbeigangs der Brustkappe 1 über die seitlich auf dem Gabelbein 5 und den Rabenbeinen 3 aufliegenden Fleischpartien und unterstützen damit das Hineindrängen der Gabelbeinschenkel 7 in die Aussparungen 17 des Formklotzes 14 . Die Wirkung ist dabei so, daß sich auch bei gebrochenem oder überdehntem Gabelbein 5 die Bruchstücke bzw. die überspreizten Gabelbeinschenkel 7 in den Aussparungen 17 versammeln lassen, so daß auch in diesem Falle eine Bündigstellung mit den Flanken 16 des Formklotzes 14 erreicht wird. In dieser Stellung wird der Formklotz 14 mit einer Bewegungskomponente beaufschlagt, die eine mit der Vorbewegung der Brustkappe 1 synchrone Begleitbewegung des Formklotzes 14 erzeugt, so daß sich dieser und die Brustklappe 1 in relativem Stillstand zueinander befinden.

Inzwischen wurden die Schälmesser 18 des Schälwerkzeuges 12 in die Bahn der Brustkappe 1 eingesteuert, wobei die Schälmesser 18 in einen gegenseitigen Abstand auseinandergesteuert wurden, daß die Flügelgelenke 4 am vorausweisenden Ende der Rabenbeine 3 zwischen die Schälmesser 18 eintreten können. In dem Augenblick, in dem dieses geschieht,werden die Schälmesser 18 so weit zusammengesteuert, daß sie mit ihren Schneiden 19 in die Ebenen der Flanken 16 des Formklotzes 14 gelangen. Es beginnt dann eine Relativbewegung zwischen Formklotz 14 und Schälmessern 18 , in deren Verlauf die Schälmesser 18 den Flanken 16 des Formklotzes 14 folgen und das Fleisch von den in den Aussparungen 17 eingelagerten Gabelbeinschenkeln 7 ablösen. Dies geschieht unter stetigem Drängen der Gabelbeinschenkel 7 gegen den Formklotz 14 durch die Andrückelemente 13, die unmittelbar vor den Schälmessern 18 wirksam sind. Kurz nach Erreichen der Keilnase 15 werden die Schälmesser nach oben aus der Bahn der Brustkappen ausgesteuert und wieder in Ausgangsposition gebracht, so daß ein neuer Zyklus folgen kann.

An diesen Bearbeitungsschritt kann sich ein üblicher Filetierprozeß anschließen, so daß als Endprodukt ein sogenanntes "Butterfly-Filet" erzielbar ist, das weitestgehend frei von Knochenresten ist.

### Bezugszeichenliste

- 1.: Brustkappe
- 2.: Brustbein
- 3.: Rabenbein
- 4.: Flügelgelenk
- 5.: Gabelbein
- 6.: Rippe
- 7.: Gabelbeinschenkel
- 8.: Gabelbeinkopf
- 9.:
- 10.: Förderer
- 11.: Stützelement
- 12.: Schälwerkzeug
- 13.: Andrückelement
- 14.: Formklotz
- 15.: Keilnase
- 16.: Flanke
- 17.: Aussparung
- 18.: Schälmesser
- 19.: Schneide

## Patentansprüche

1. Einrichtung zum Bearbeiten der Körper geschlachteten Geflügels oder Teilen davon zwecks Ablösen des Fleisches von dem Skelett, insbesondere im Bereich des Gabelbeins und von dem Gabelbein (clavicula) (5) , wobei das zu bearbeitende Produkt in bezug auf die Lage der Innenseite des Brustbeins (sternum) (2) und seiner Symmetrieebene ausgerichtet gehaltert ist und wobei die Gabelbeinschenkel (7) mindestens von innen her mittels eines zwischen diese bringbaren Stützelementes (11) abgestützt werden und das Ablösen des Fleisches durch längs der Flanken (16) des Stützelementes (11) geführte Schälmesser (18) erfolgt, **dadurch gekennzeichnet,** daß jedem Schälmesser (18) mindestens ein unmittelbar vor dessen Schneide (19) wirksames, die Gabelbeinschenkel (7) gegen die Flanken (16) des Stützelementes (11) drängendes Andrückelement (13) zugeordnet ist.

2. Einrichtung nach Anspruch 1 , bei der die Halterung des zu bearbeitenden Produktes durch mit einem angetriebenen Förderer (10) verbundene sattelförmige Aufnahmemittel erfolgt, **dadurch gekennzeichnet,** daß jedes Andrückelement (13) als unter Federkraft in die Bahn des Produktes einschwenkbarer Schwenkarm ausgebildet ist, der an seinem freien Ende mit einer mit dem Produkt in Kontakt tretenden und im wesentlichen in Höhe der Bahn des Gabelbeins (5) angeordneten Andrückfläche versehen ist.

## Claims

1. Equipment for processing the carcasses of slaughtered poultry or parts thereof for the purpose of detaching the meat from the skeleton, particularly in the region of the wishbone and from the wishbone (clavicula) (5), wherein the product to be processed is held aligned with respect to the position of the inner side of the breastbone (sternum) (2) and its plane of symmetry and wherein the wishbone limbs (7) are supported at least from the inside by means of a support element (11) which can be brought therebetween and the detaching of the meat is carried by a paring knife (18) guided along the flanks (16) of the support element (11), characterised in that each paring knife (18) is associated with at least one presser element (13) which is effective directly in front of the blade (19) of the knife and urges the wishbone limbs (7) against the flanks (16) of the support element (11).

2. Equipment according to claim 1, in which the holding of the product to be processed is effected by saddle-shaped receiving means connected with a driven conveyor (10), characterised in that each presser element (13) is constructed as a pivot arm which is pivotable under spring force into the path of the product and which is provided at its free end with a presser surface coming into contact with the product and arranged substantially at the height of the path of the wishbone (5).

## Revendications

1. Dispositif pour traiter les corps de volailles abattues ou de parties de ceux-ci, dans le but de détacher la chair du squelette, en particulier de la fourchette (clavicules) (5) et dans la région de la fourchette, le produit à traiter étant supporté de façon à être maintenu aligné sur l'orientation de la face intérieure du sternum (2) et de son plan de symétrie, les branches (7) de la fourchette étant alors soutenues, au moins de l'intérieur, au moyen d'un élément de soutien (11) pouvant être amené entre elles et le détachement de la chair étant réalisé par des couteaux de décollement (18) guidés le long des flancs (16) de l'élément de soutien (11), caractérisé en ce qu'à chaque couteau de décollement (18) est associé au moins un élément presseur (13) intervenant juste en amont du tranchant (19) de ce dernier et repoussant les branches (7) de la fourchette contre les flancs (16) de l'élément de soutien (11).

2. Dispositif selon la revendication 1, dans lequel le support du produit à traiter se fait à l'aide de moyens de réception en forme de selle reliés à un transporteur motorisé (10), caractérisé en ce que chaque élément presseur (13) est conçu sous la forme d'un bras pivotant, qui peut être amené par pivotement dans le trajet du produit, sous l'action de la force d'un ressort, et qui est pourvu, à son extrémité libre, d'une surface de pression entrant en contact avec le produit et disposée sensiblement à hauteur du trajet de la fourchette (5).
